# EUROPEAN PATENT APPLICATION

(11) **EP 4 528 637 A1**
(43) Date of publication of application: **26.03.2025**
(21) Application number: 24156188.5
(22) Date of filing: 07.02.2024
(51) Int. Cl.: G06T 7/00, G06F 3/09, H04N 1/42, G06F 3/12, H04N 1/00

(54) **INFORMATION PROCESSING SYSTEM, INFORMATION PROCESSING METHOD, AND PROGRAM**

(30) Priority: 25.09.2023 JP 2023161483
(71) Applicant: Fujifilm Business Innovation Corp., Tokyo 107-0052 (JP)
(72) Inventor: HASEGAWA, Maki, Yokohama, 220-8668 (JP); TOMODA, Kyotaro, Yokohama, 220-8668 (JP); TAKAHASHI, Kazuyuki, Yokohama, 220-8668 (JP)
(74) Representative: Meissner Bolte Partnerschaft mbB

(57) **Abstract**

An information processing system includes at least one processor configured to: cause a storage device to retain weight values for each of one or more evaluation items related to image quality; obtain image data to be evaluated; evaluate the image data for each of the evaluation items based on evaluation criteria for each of the evaluation items; and evaluate the image quality of an image pertaining to the image data on a basis of evaluation results of the evaluation for each of the evaluation items and the corresponding weight values retained in the storage device for each of the evaluation items.

## Description

### Background

### (i) Technical Field

The present invention relates to an information processing system, an information processing method, and a program.

### (ii) Related Art

Evaluation criteria are defined to evaluate the quality of an image. Japanese Unexamined Patent Application Publication No. 10-63859 discloses the following: learning a relationship between features of a partial image at positions in an image of interest to a subject when determining an overall image quality score and an image quality rating calculated according to such features; identifying, on the basis of the learning result, the positions of partial images to be evaluated in relation to image quality evaluation items required to determine an overall image quality score for an image under evaluation; calculating image quality ratings for the image quality evaluation items required to determine an overall image quality score with respect to the partial image information at the identified positions; and calculating an overall image quality score for the image under evaluation on the basis of the calculated image quality ratings and the learning result.

### Summary

In image diagnosis, image quality is evaluated on the basis of criteria for each of predetermined items. However, the evaluation items to be scrutinized may differ from user to user, and in some cases, it may be desirable for the preferences of such users to be reflected in the evaluation of an image.

Accordingly, it is an object of the present disclosure to provide a system capable of returning an image quality evaluation that reflects user preferences, as compared to a configuration that evaluates image quality on the basis of indiscriminate criteria.

According to a first aspect of the present disclosure, there is provided an information processing system including at least one processor configured to: cause a storage device to retain weight values for each of one or more evaluation items related to image quality; obtain image data to be evaluated; evaluate the image data for each of the evaluation items based on evaluation criteria for each of the evaluation items; and evaluate the image quality of an image pertaining to the image data on a basis of evaluation results of the evaluation for each of the evaluation items and the corresponding weight values retained in the storage device for each of the evaluation items.

According to a second aspect of the present disclosure, in the information processing system according to the first aspect, the storage device retains a table in which a plurality of sets of the weight values for the evaluation items are associated with image output characteristics, and the processor is configured to: obtain information specifying the output characteristics of a piece of equipment that outputs the image data, in response to a user operation; associate, on a basis of the table, a set of the weight values corresponding to the output characteristics of the piece of equipment specified by the information with the piece of equipment; and evaluate the image quality of an image outputted by the piece of equipment by applying the set of the weight values associated with the piece of equipment to the evaluation results for each of the evaluation items.

According to a third aspect of the present disclosure, in the information processing system according to the second aspect, the processor is configured to accept an individual change to the weight value for one or more evaluation items in a set of the weight values for individual pieces of equipment with which the set of the weight values is associated, and update the set of the weight values, in response to a user operation.

According to a fourth aspect of the present disclosure, in the information processing system according to the second aspect, the processor is configured to accept a change to adjust, in a predetermined range, each weight value included in a set of the weight values for individual pieces of equipment with which the set of the weight values is associated, and update the set of the weight values, in response to a user operation.

According to a fifth aspect of the present disclosure, in the information processing system according to any of the first to fourth aspects, the processor is configured to: obtain history information related to image output from a piece of equipment that outputs the image data; update the weight values to be applied to an evaluation of an image outputted by the piece of equipment, on a basis of information related to image quality included in the obtained history information; and evaluate the image quality of an image outputted by the piece of equipment by applying the updated weight values to the evaluation results for each of the evaluation items.

According to a sixth aspect of the present disclosure, in the information processing system according to the fifth aspect, when a setting related to image quality in the piece of equipment meets a predetermined condition in a plurality of image outputs by the piece of equipment, the processor is configured to update the weight values on a basis of the history information for the plurality of image outputs.

According to a seventh aspect of the present disclosure, there is provided an information processing method including: causing a storage device to retain weight values for each of one or more evaluation items related to image quality; obtaining image data to be evaluated; evaluating the image data for each of the evaluation items based on evaluation criteria for each of the evaluation items; and evaluating the image quality of an image pertaining to the image data on a basis of evaluation results of the evaluation for each of the evaluation items and the corresponding weight values retained in the storage device for each of the evaluation items.

According to an eighth aspect of the present disclosure, there is provided a program causing a computer to execute a process including: causing a storage device to retain weight values for each of one or more evaluation items related to image quality; obtaining image data to be evaluated; evaluating the image data for each of the evaluation items based on evaluation criteria for each of the evaluation items; and evaluating the image quality of an image pertaining to the image data on a basis of evaluation results of the evaluation for each of the evaluation items and the corresponding weight values retained in the storage device for each of the evaluation items.

According to the first aspect of the present disclosure, it is possible to return an image quality evaluation that reflects user preferences, as compared to a configuration that evaluates image quality on the basis of indiscriminate criteria.

According to the second aspect of the present disclosure, the effort involved in setting weight values may be reduced compared to a configuration in which a user inputs weight values individually for each evaluation item.

According to the third aspect of the present disclosure, evaluation may be performed in accordance with individualized settings for each piece of equipment, as compared to a configuration that evaluates image quality on the basis of weight values set according to output characteristics.

According to the fourth aspect of the present disclosure, evaluation may be performed in accordance with settings for each piece of equipment, as compared to a configuration that evaluates image quality on the basis of weight values set according to output characteristics.

According to the fifth aspect of the present disclosure, the effort involved in setting weight values may be reduced compared to a configuration in which a user inputs weight values for each evaluation item according to the piece of equipment used.

According to the sixth aspect of the present disclosure, user preferences regarding image quality may be reflected, unlike a configuration that updates weight values on the basis of a single image output.

According to the seventh aspect of the present disclosure, it is possible to return an image quality evaluation that reflects user preferences, as compared to a configuration that evaluates image quality on the basis of indiscriminate criteria.

According to the eighth aspect of the present disclosure, it is possible to return an image quality evaluation that reflects user preferences on a computer having a program according to an exemplary embodiment of the present disclosure installed thereon, as compared to a configuration that evaluates image quality on the basis of indiscriminate criteria.

### Brief Description of the Drawings

An exemplary embodiment of the present disclosure will be described in detail based on the following figures, wherein:
Fig. 1 is a diagram illustrating a configuration of a diagnostic system to which an exemplary embodiment is applied;
Fig. 2 is a diagram illustrating a configuration of an image processing device;
Fig. 3 is a diagram illustrating an exemplary configuration of a computer that realizes a diagnostic server;
Fig. 4 is a diagram illustrating an exemplary configuration of a computer that realizes a terminal device;
Fig. 5 is a diagram illustrating an evaluation procedure by a diagnostic server;
Figs. 6A to 6C are diagrams for explaining sets of weight values determined according to output characteristics, in which Fig. 6A is a diagram illustrating an example of input information provided by a user, Fig. 6B is a diagram illustrating an example of a correspondence table between input information and job categories, and Fig. 6C is a diagram illustrating an example of a settings table of weight values by job category;
Figs. 7A and 7B are diagrams illustrating example settings of weight values set with respect to an individual image processing device, in which Fig. 7A is a diagram illustrating weight values set on the basis of selection items, and Fig. 7B is a diagram illustrating a situation in which the weight value for an individual evaluation item is changed;
Fig. 8 is a diagram illustrating an example of a weight value adjustment table;
Fig. 9 is a diagram illustrating a situation in which the weight values for evaluation items are adjusted;
Fig. 10 is a diagram illustrating example settings of weight values for each image processing device; and
Fig. 11 is a diagram illustrating an example of weight value sets prepared in correspondence with operating modes.

### Detailed Description

Hereinafter, an exemplary embodiment of the present disclosure will be described in detail and with reference to the attached drawings.

### <System configuration>

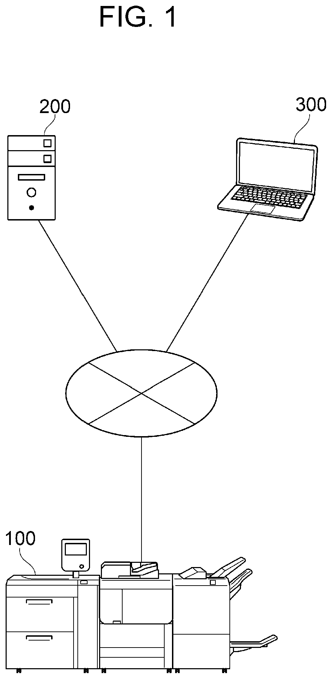

Fig. 1 is a diagram illustrating a configuration of a diagnostic system to which the exemplary embodiment is applied. The diagnostic system is provided with an image processing device 100, a diagnostic server 200, and a terminal device 300. The image processing device 100 is a device that forms and outputs an image using an image forming material such as toner on a recording material such as paper. The image processing device 100 also has a function to read and transmit an outputted image to the diagnostic server 200. The diagnostic server 200 is a server that evaluates an image received from the image processing device 100 and makes a diagnosis related to image quality. The terminal device 300 is an information processing device for obtaining a diagnostic result from the diagnostic server 200 and presenting the diagnostic result to an administrator or the like.

The image processing device 100 and the diagnostic server 200, and the diagnostic server 200 and the terminal device 300, are connected to one another over a network. The network is not particularly limited, and may be any network usable for data communication between devices. For example, a local area network (LAN), a wide area network (WAN), or the Internet may be used. The communication channel used for data communication may be wired, wireless, or a combination of the two. In one configuration, a relay device such as a gateway device, a router, or an access point may be used to connect devices through multiple networks and/or communication channels. The connection between the diagnostic server 200 and the terminal device 300 may use the same network as the network used for the connection between the image processing device 100 and the diagnostic server 200, or use a different network. The diagnostic server 200 and the terminal device 300 may also be connected directly in a case where the diagnostic server 200 is configured as a local server machine and placed in the same location as the terminal device 300.

### <Configuration of image processing device 100>

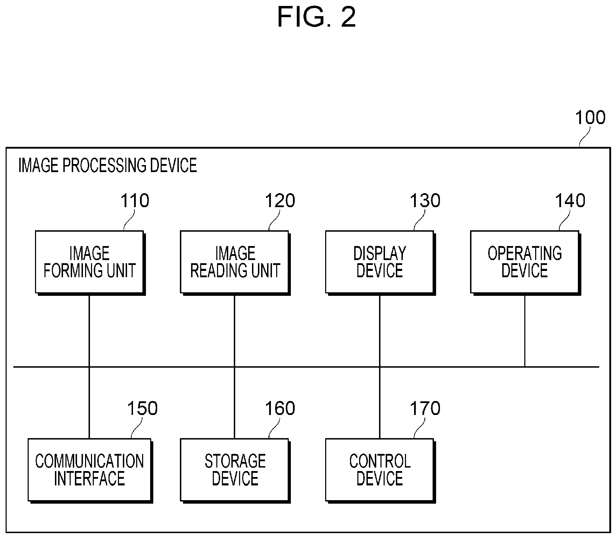

Fig. 2 is a block diagram illustrating a configuration of the image processing device 100. The image processing device 100 is provided with an image forming unit 110, an image reading unit 120, a display device 130, an operating device 140, a communication interface 150, a storage device 160, and a control device 170.

The image forming unit 110 uses an image forming material to form an image based on image data on a recording material. The method used to form an image on a recording material may be, for example, an electrophotographic method in which an image is formed by causing toner adhering to a photoconductor to be transferred to a recording material, or an inkjet method in which an image is formed by propelling ink onto a recording material.

The image reading unit 120 includes what is commonly called a scanner, and optically reads an image on a set document to generate data of a read image. The image reading method to be used may be, for example, a charge-coupled device (CCD) method in which light from a light source is emitted toward a document and the reflected light therefrom is focused by a lens and sensed by a CCD, or a contact image sensor (CIS) method in which light from light-emitting diode (LED) light sources is successively emitted toward a document and the reflected light therefrom is sensed by a CIS.

The display device 130 displays images, such as an informational image presenting various information to a user of the image processing device 100, a preview image of an image to be read, outputted, or otherwise processed, and an operating image enabling the user to perform operations. The display device 130 is a liquid crystal display, for example. The display device 130 and the operating device 140 may also be combined and used as a user interface by which the user inputs and outputs information with respect to the image processing device 100.

The operating device 140 enables the user to perform operations, such as entering commands and data. The operating device 140 includes, for example, hardware keys and a touch sensor that outputs a control signal according a position pressed or touched by a finger or the like. The touch sensor and the liquid crystal display included in the display device 130 may also be combined to form a touch panel.

The communication interface 150 is an interface for transmitting and receiving commands and data to and from an external device. An interface suited to the method of communication with the external device is used as the communication interface 150. The connection with the external device may be a connection going through a network, or a direct connection. The communication channel may be a wired channel or a wireless channel. When the image processing device 100 includes a facsimile function, the communication interface 150 includes an interface for a telephone line.

The storage device 160 stores data and programs to be executed by the control device 170, the data of images read by the image reading unit 120 and the like, log data generated by various operations, and various other types of data. The storage device 160 is achieved with a storage device such as a magnetic disk drive or a solid-state drive (SSD), for example.

The control device 170 includes means for computation and storage, namely a processor and a memory, and performs various data processing and control of the image processing device 100 by loading a program stored in the storage device 160 into the memory and executing the program. For the processor, besides a central processing unit (CPU), a microprocessing unit (MPU), a graphics processing unit (GPU), a digital signal processor (DSP), or the like is used. For the memory, dynamic random access memory (DRAM) is used, for example.

### <Configuration of diagnostic server 200>

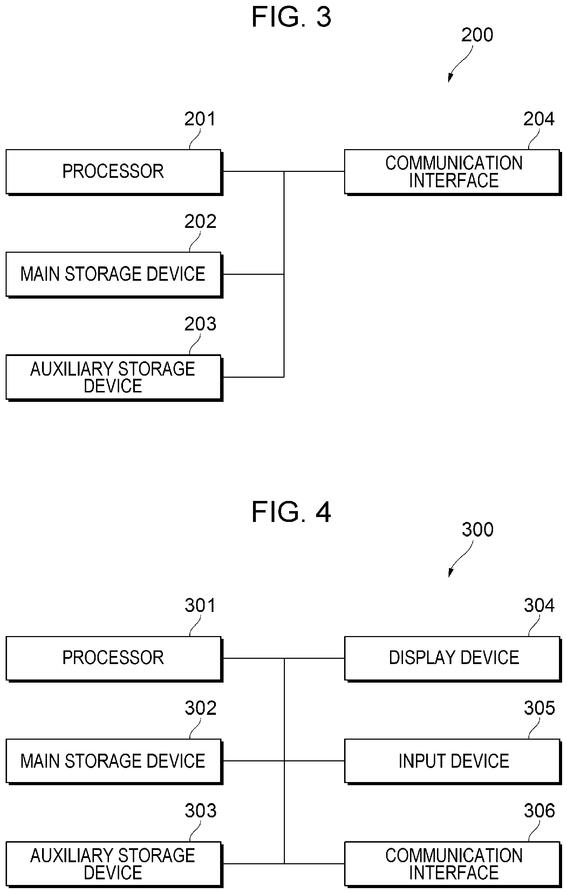

Fig. 3 is a diagram illustrating an exemplary configuration of a computer that realizes the diagnostic server 200. The diagnostic server 200 is provided with means for computation, namely one or more processors 201, and means for storage, namely a main storage device (main memory) 202 and an auxiliary storage device 203. The processor 201 achieves the functions of the diagnostic server 200 by loading a program stored in the auxiliary storage device 203 into the main storage device 202 and executing the program. For the processor 201, a central processing unit (CPU), microprocessing unit (MPU), graphics processing unit (GPU), or digital signal processor (DSP) is used, for example. For the main storage device 202, random access memory (RAM) is used, for example. For the auxiliary storage device 203, a magnetic disk drive or a solid-state drive (SSD) is used, for example. The diagnostic server 200 is also provided with a communication interface 204 for connecting to the image processing device 100 and the terminal device 300 over a network.

The diagnostic server 200 evaluates and diagnoses an image obtained from the image processing device 100 by having the processor 201 execute a program. The diagnostic server 200 is an example of an information processing system. Details regarding the evaluation and diagnosis of an image by the diagnostic server 200 will be described later. Note that the computer configuration illustrated in Fig. 3 is merely one example, and the computer realizing the diagnostic server 200 is not limited to the configuration illustrated in Fig. 3. For example, a configuration provided with non-volatile memory such as flash memory and read-only memory (ROM) as storage devices is also possible. Furthermore, the diagnostic server 200 is not limited to being a single computer as illustrated in Fig. 3, and may also be configured by distributing functions to multiple computers, or be realized as what is called a cloud server or the like built using resources on a network.

### <Configuration of terminal device 300>

Fig. 4 is a diagram illustrating an exemplary configuration of a computer that realizes the terminal device 300. The terminal device 300 is provided with means for computation, namely one or more processors 301, and means for storage, namely a main storage device (main memory) 302 and an auxiliary storage device 303. The processor 301 achieves the functions of the terminal device 300 by loading a program stored in the auxiliary storage device 303 into the main storage device 302 and executing the program. For the processor 301, a CPU, MPU, GPU, or DSP is used, for example. For the main storage device 302, RAM is used, for example. For the auxiliary storage device 303, a magnetic disk drive or SSD is used, for example.

The terminal device 300 is also provided with a display device 304 that displays various screens and an input device 305 that accepts input operations performed by a user. The display device 304 is a liquid crystal display, for example. The input device 305 includes a touch sensor and/or a keyboard, for example. The touch sensor of the input device 305 and the liquid crystal display of the display device 304 may also be combined to form a touch panel. The terminal device 300 is also provided with a communication interface 306 for connecting to the diagnostic server 200 over a network. For the terminal device 300, a smartphone, a tablet, or a laptop personal computer may be used, for example. Note that the computer configuration illustrated in Fig. 4 is merely one example, and the computer to be used as the terminal device 300 is not limited to the exemplary configuration in Fig. 4. For example, a configuration provided with non-volatile memory such as flash memory and ROM as storage devices is also possible.

### <Evaluation of image by diagnostic server 200>

Next, the evaluation and diagnosis of an image by the diagnostic server 200 will be described. As preliminary operations, an image formed on a recording material by the image forming unit 110 of the image processing device 100 is outputted, and the outputted image is read by the image reading unit 120 to obtain read data (image data) of the output image. Thereafter, the image data is transmitted from the image processing device 100 to the diagnostic server 200 and subjected to evaluation and diagnosis by the diagnostic server 200.

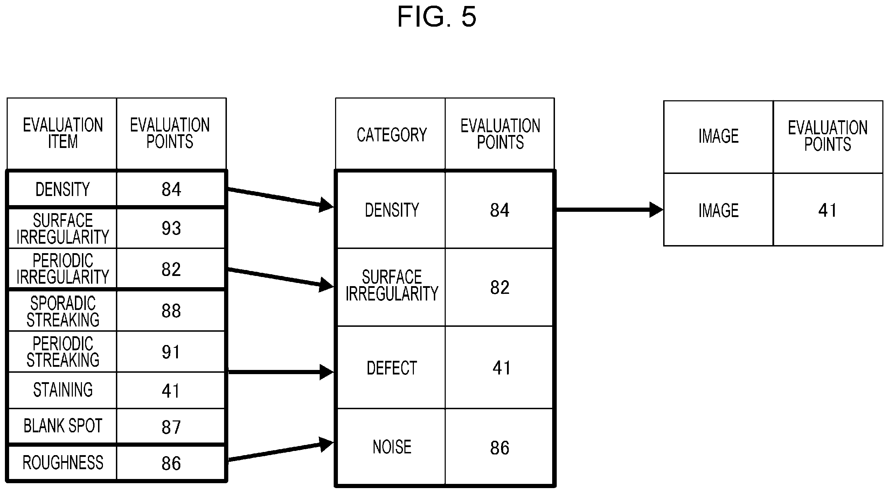

Fig. 5 is a diagram illustrating an evaluation procedure by the diagnostic server 200. In the evaluation of an image by the diagnostic server 200, first, an evaluation is made with respect to evaluation items pertaining to image quality divided into multiple categories. An evaluation for each category is made on the basis of the evaluation results for each of the evaluation items, and an evaluation of the image quality of the overall image is made on the basis of the evaluation results for each of the categories. The evaluations for each of the evaluation items are given by points (hereinafter referred to as "evaluation points") specified according to a preset evaluation criterion for each evaluation item. In the example illustrated in Fig. 5, "density", "surface irregularity", "periodic irregularity", "sporadic streaking", "periodic streaking", "staining", "blank spot", "roughness", and the like are set as evaluation items, and "density", "surface irregularity", "defect", "noise", and the like are set as categories. The evaluation item "density" is included in the category "density". The evaluation item "surface irregularity" and the evaluation item "periodic irregularity" are included in the category "surface irregularity". The evaluation items "sporadic streaking", "periodic streaking", "staining", and "blank spot" are included in the category "defect". The evaluation item "roughness" is included in the category "noise".

As above, the diagnostic server 200 first specifies evaluation points for each evaluation item with respect to an image to be diagnosed, on the basis of an evaluation criterion for each evaluation item. The evaluation items and evaluation criteria are not particularly limited. The specific settings of the evaluation items and evaluation criteria may be set by a provider of the diagnostic system or by a user of the diagnostic system. The user may also be able to modify initial settings set by the provider of the diagnostic system. The category classifications similarly may be configured to be set by the provider or user of the diagnostic system. The diagnostic server 200 calculates evaluation points for each category on the basis of the evaluation points for each of the evaluation items specified on the basis of the evaluation criteria, and further calculates, on the basis of the evaluation points for each of the categories, evaluation points for the image quality of the overall image to be diagnosed.

The example illustrated in Fig. 5 will be used to describe one example of a method of calculating evaluation points for categories on the basis of evaluation points for evaluation items. As an example, see the evaluation items "sporadic streaking", "periodic streaking", "staining", and "blank spot" included in the category "defect". In the example illustrated in Fig. 5, "sporadic streaking" has 88 evaluation points, "periodic streaking" has 91 evaluation points, "staining" has 41 evaluation points, and "blank spot" has 87 evaluation points. Note that evaluation points are assumed to have a maximum of 100 points. First, the evaluation points of each evaluation item are subtracted from the maximum of 100 points, and the obtained value is then multiplied by a weight value predetermined for each evaluation item. For simplicity, the weight value is assumed to be 1.0 here. In the example illustrated in Fig. 5, the calculated values for each of the evaluation items are 12 for "sporadic streaking", 9 for "periodic streaking", 59 for "staining", and 13 for "blank spot". The maximum value from among the calculated values is subtracted from 100 to obtain the evaluation points for the category to which the evaluation items belong. In the above example, 59 is the maximum value, and thus the evaluation points for the category "defect" are 41 (=100-59).

Evaluation points reflecting weightings corresponding to the evaluation points of each of the evaluation items for other categories are calculated in a similar manner. In the example illustrated in Fig. 5, the category "density" has 84 evaluation points, "surface irregularity" has 82 evaluation points, "defect" has 41 evaluation points, and "noise" has 86 evaluation points.

Evaluation points for the overall image are calculated on the basis of the evaluation points for each of the categories and the weightings corresponding to the evaluation points. In the example illustrated in Fig. 5, the weight value is set to 1.0, and the maximum value among the calculated values is used to calculate evaluation points for the image according to a calculation method similar to the above calculation method for calculating the evaluation points for categories from the evaluation points of the evaluation items. That is, the calculated value for the category "density" is 16 (=(100-84)x 1.0), the calculated value for "surface irregularity" is 18, the calculated value for "defect" is 59, and the calculated value for "noise" is 14, of which the maximum value is 59 for the category "defect", and thus the evaluation points for the image are 41 (=100-59).

The weight value to be used in the above calculation method may be changed in accordance with user specifications and/or the implementation of image output. This allows the evaluation points for an image to reflect user preferences and/or tendencies in actual image output. Details regarding a method of specifying weight values will be described later. Note that the above calculation methods are merely one example of a method of specifying evaluation points for categories on the basis of evaluation points for evaluation items and a method of specifying evaluation points for an image on the basis of evaluation points for categories, and the calculation methods are not limited to the above methods. Also, in the above example, the evaluation points for categories are specified on the basis of the maximum value among the calculated values for evaluation items, and the evaluation points for an image are specified on the basis of the maximum value among the calculated values for categories. In contrast, weights may be set according to the order of the calculated values by size or the values themselves, the evaluation points for multiple evaluation items may be reflected in the evaluation points for a category, and the evaluation points for multiple categories may be reflected in the evaluation points for an image.

### <Setting the weighting for each evaluation item>

The setting of the weighting may be performed by any of various methods. The following describes a method in which a set of predetermined weight values is selected according to the output characteristics in a job executed on the image processing device 100, and if necessary, the user changes the weight values individually for each evaluation item. The user may set all of the weight values for individual evaluation item, but by using such a set of weight values, the effort involved in setting the weight values may be reduced.

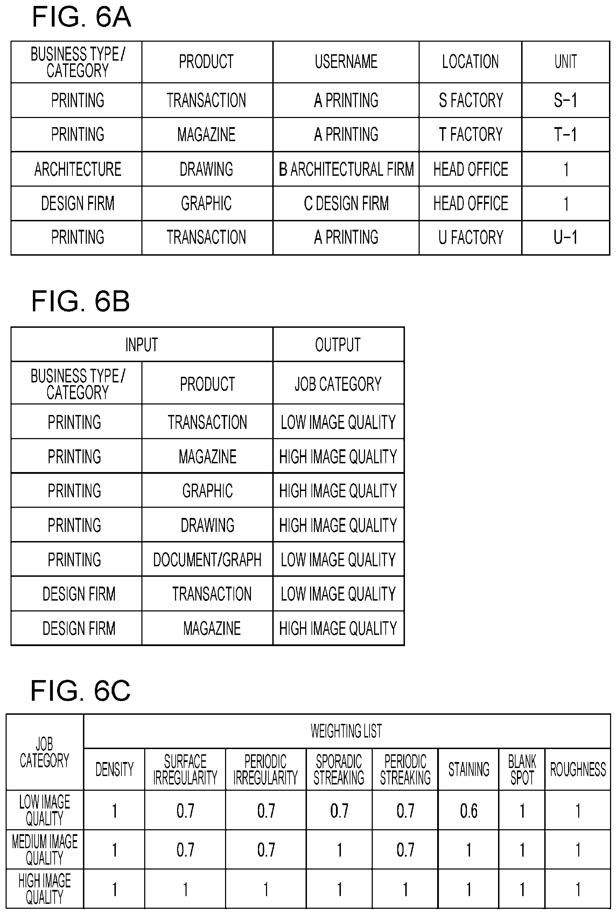

Figs. 6A to 6C are diagrams for explaining sets of weight values determined according to output characteristics, in which Fig. 6A is a diagram illustrating an example of input information provided by a user, Fig. 6B is a diagram illustrating an example of a correspondence table between input information and job categories, and Fig. 6C is a diagram illustrating an example of a settings table of weight values by job category. The input information in Fig. 6A is registered in the diagnostic server 200 by having the user perform input operations on the terminal device 300. The tables in Figs. 6B and 6B are retained in a storage device (for example, the auxiliary storage device 203 illustrated in Fig. 3) of the diagnostic server 200, for example.

In the example illustrated in Fig. 6A, "business type/category", "product", "username", "location", and "unit" are set as items of input information. "Business type/category" is information indicating the business type or business category in which the image processing device 100 is to be used, and in the example illustrated in Fig. 6A, printing, architecture, design firm, and the like are registered. "Product" is information indicating the type of image as a product to be outputted by the image processing device 100, and in the example illustrated in Fig. 6A, transaction, magazine, drawing, graphic, and the like are registered. "Username" is information indicating the owner of the image processing device 100, and in the example illustrated in Fig. 6A, A Printing, B Architectural Firm, C Design Firm, and the like are registered. "Location" is information indicating the installation location of the image processing device 100, and in the example illustrated in Fig. 6A, S factory, T factory, head office, U factory, and the like are registered. "Unit" is identification information for individual image processing devices 100, and S-1, T-1, 1, U-1, and the like are registered.

The input of input information by the user includes selection items, which are selected from information prepared in advance, and free input items, which the user inputs individually. Selection items are items set in advance by the provider of the diagnostic system or the like, and are inputted by having the user select any item. Free input items are items inputted by the user through individual input operations. In the example illustrated in Fig. 6A, "business type/category" and "product" are selection items, while "username", "location", and "unit" are free input items. Consequently, in the example illustrated in Fig. 6A, "printing-transaction", "printing-magazine", "architecture-drawing", "design firm-graphic", and the like are prepared in advance as "business type/category-product" selection items, and the user selects and registers items suited to the user themself from among the items. The user also inputs and registers information for each of "username", "location", and "unit".

The selection items of the input information are associated with job categories. A job category is information specifying the type of a set of weight values. In the following, three types of job categories, namely low image quality, medium image quality, and high image quality, are set as an example. In the correspondence table illustrated in Fig. 6B, the selection items "printing-transaction", "printing-document/graph", "design firm-transaction", and the like are associated with low image quality, while the selection items "printing-magazine", "printing-graphic", "printing-drawing", "design firm-magazine", and the like are associated with high image quality. The diagnostic server 200, upon receiving the selection of a selection item, references a correspondence table like the one illustrated in Fig. 6B and specifies the job category corresponding to the selected selection item.

In each job category, a weight value is set for each evaluation item. In the settings table illustrated in Fig. 6C, weight values for the evaluation items "density", "surface irregularity", "periodic irregularity", "sporadic streaking", "periodic streaking", "staining", "blank spot", and "roughness" are set with respect to each of the job categories of low image quality, medium image quality, and high image quality.

Next, free input items will be described. Individual image processing devices 100 are identifiable by the information of free input items inputted by the user. The diagnostic server 200 retains the image processing device 100 identified by the information of selection items and free input items in association with weight values for each of the evaluation items set for the image processing device 100. The correspondence information is retained in a storage device (for example, the auxiliary storage device 203 illustrated in Fig. 3) of the diagnostic server 200, for example.

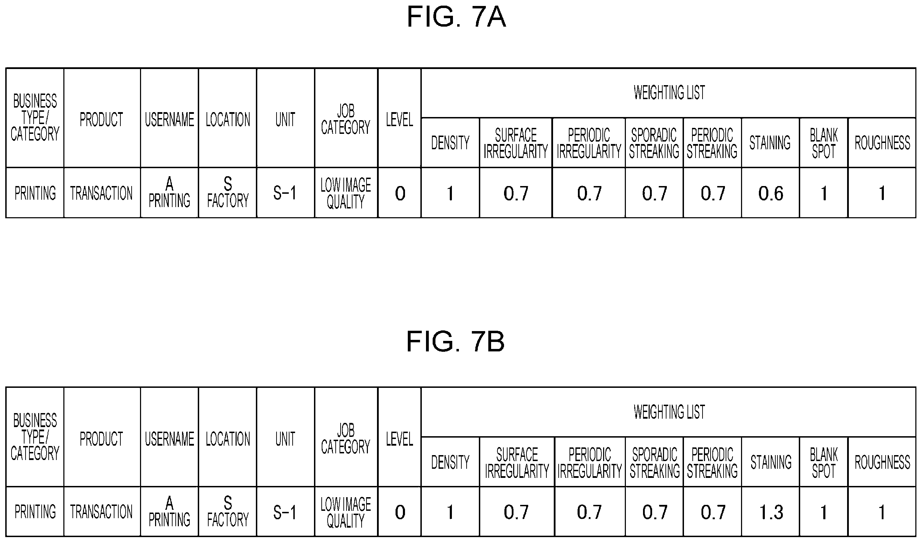

Figs. 7A and 7B are diagrams illustrating example settings of weight values set with respect to an individual image processing device 100, in which Fig. 7A is a diagram illustrating weight values set on the basis of selection items, and Fig. 7B is a diagram illustrating a situation in which the weight value for an individual evaluation item is changed. In the example illustrated in Fig. 7A, the identification information of the image processing device 100 is "printing-transaction-A Printing-S factory-S-1", according to the input information of the selection items and free input items. Since the input information of the selection items is "printing-transaction", the job category is "low image quality". The weight values for each of the evaluation items are "density": 1.0, "surface irregularity": 0.7, "periodic irregularity": 0.7, "sporadic streaking": 0.7, "periodic streaking": 0.7, "staining": 0.6, "blank spot": 1.0, and "roughness": 1.0, according to the settings table illustrated in Fig. 6C.

At this point, suppose that the user wants to make an even stricter evaluation regarding the evaluation item "staining" for unit S-1 installed in the location "S factory" of the username "A Printing". In this case, the user is able to change the weight value for the individual evaluation item "staining" in the weight value set illustrated in Fig. 7A. In the example illustrated in Fig. 7B, the weight value for the evaluation item "staining" is changed to 1.3 from 0.6 illustrated in Fig. 7A.

Next, the adjustment of a set of weight values will be described. The changing of a weight value described with reference to Figs. 7A and 7B is performed individually for each evaluation item. In contrast, in some cases, it is desirable to evaluate the image quality of an image more strictly overall, or conversely, more leniently. In such cases, it is conceivable to change the overall weight values for the evaluation items within a predetermined range to adjust the weighting for the image processing device 100 in question.

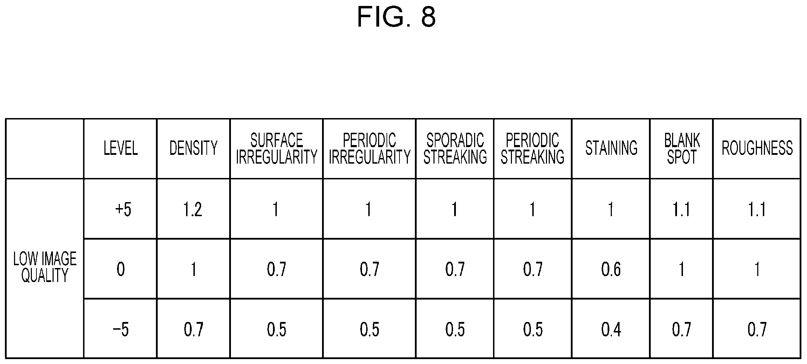

Fig. 8 is a diagram illustrating an example of a weight value adjustment table. As an example, Fig. 8 illustrates values (hereinafter referred to as "adjusted values") that have been adjusted with respect to the weight value set for low image quality. The weight values are adjusted within a predetermined, fixed range based on the weight value set in the settings table illustrated in Fig. 6C as standard. In this case, the weight values are adjustable to levels from - 5 to +5 with respect to the standard weight value set. Note that in the example illustrated in Fig. 8, weight value sets for the evaluation items are illustrated for the case of level +5, standard (level 0), and level -5, but it is assumed that weight value sets are also set for levels between level +5 and standard, and between standard and level -5, with adjusted values set for every 1 level value, for example. In the example illustrated in the drawing, in the case of a level with a positive value, the values of the weight values are increased with respect to standard, and in the case of a level with a negative value, the values of the weight values are decreased with respect to standard.

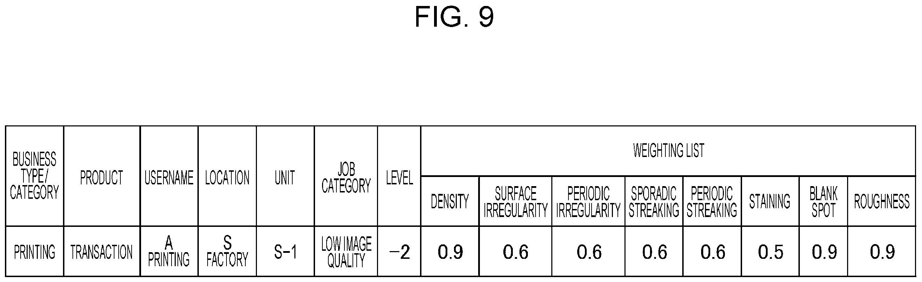

Fig. 9 is a diagram illustrating a situation in which the weight values for evaluation items are adjusted. As an example, consider the case of making adjustments to lower the level of the weight values in relation to unit S-1 installed in the location "S factory" of the user "A Printing". The standard weight value set for unit S-1 is assumed to be the values illustrated in Fig. 7A. This weight value set is assumed to be adjusted to level -2. Referring to Fig. 9, the weight values for the evaluation items are adjusted to values lower than the values illustrated in Fig. 7A.

Note that the method of setting the adjusted values for each level is not particularly limited. For example, values predetermined for each level may be retained in a storage device (for example, the auxiliary storage device 203 illustrated in Fig. 3) of the diagnostic server 200, or values may be calculated according to a predetermined formula using the standard weight value set and the selected level. After a weight value set is adjusted as described with reference to Figs. 8 and 9, the weight values may be further changed individually as described with reference to Figs. 7A and 7B in relation to individual evaluation items.

As above, the diagnostic server 200 uses the weight values for the evaluation items set for each image processing device 100 of each user to calculate evaluation points for each category and calculate evaluation points for an image. Accordingly, even if images are outputted on different image processing devices 100 in such a way that the evaluation points for the evaluation items are the same, the evaluation points for each of the images may be different depending on the how the weight values are set.

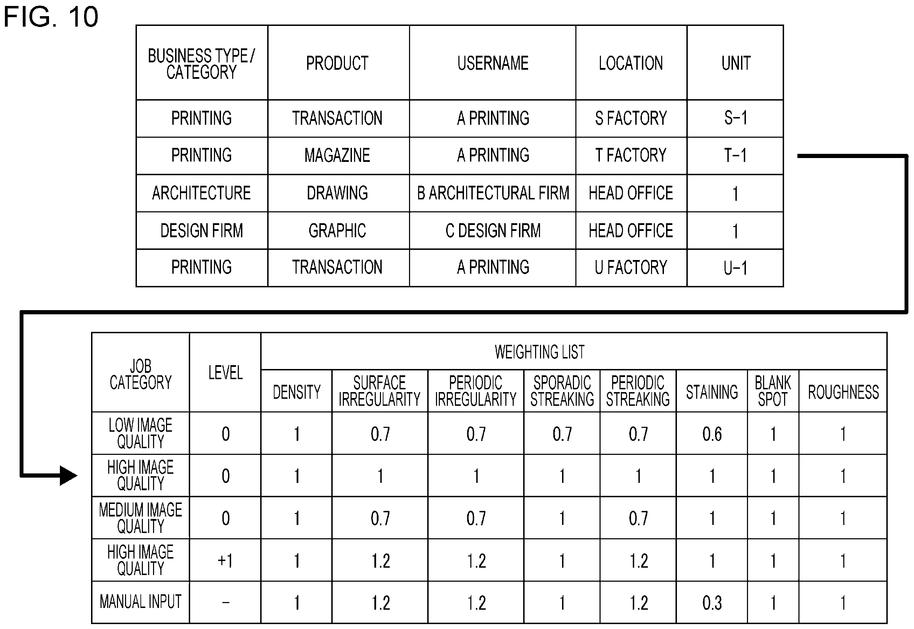

Fig. 10 is a diagram illustrating example settings of weight values for each image processing device 100. and Fig. 10 illustrates an example of weight value sets set in relation to each of the image processing devices 100 identified by the input information illustrated in Fig. 6A. Referring to Fig. 10, the weight value set for each image processing device 100 is different depending on whether the job category is low image quality, medium image quality, or high image quality. Unit T-1 of A printing and unit 1 of C Design Firm are both set to high image quality, but since unit 1 of C Design Firm is adjusted to level +1, the weight values for some evaluation items are larger than the weight values for unit T-1 of A Printing. Also, for unit U-1 at U factory of A Printing, the weight values for the evaluation items have been set by manual input to be a characteristic weight value set in which the weight values for the evaluation items other than "staining" are large, and only the weight value for "staining" is much smaller.

As an example, consider the case of outputting the same image on unit S-1 installed at S factory, unit T-1 installed at T factory, and unit U-1 installed at U factory of A Printing. The evaluation points for each evaluation item for the image are assumed to be the evaluation points illustrated in Fig. 5. That is, "density" is 84 points, "surface irregularity" is 93 points, "periodic irregularity" is 82 points, "sporadic streaking" is 88 points, "periodic streaking" is 91 points, "staining" is 41 points, "blank spot" is 87 points, and "roughness" is 86 points.

In this case, if the weight value sets illustrated in Fig. 10 are used to calculate the evaluation points for each category according to the calculation method described with reference to Fig. 5, unit S-1 has 84 points in the category "density", 87.4 points in "surface irregularity", 64.6 points in "defect", and 86 points in "noise". Similarly, unit T-1 has 84 points in the category "density", 82 points in "surface irregularity", 41 points in "defect", and 86 points in "noise". Unit U-1 has 84 points in the category "density", 78.4 points in "surface irregularity", 82.3 points in "defect", and 86 points in "noise".

If the evaluation points for the images are then calculated on the basis of these evaluation points for each category, unit S-1 has 64.6 points, unit T-1 has 41 points, and unit U-1 has 78.4 points. In this way, even though the images are the same (images with the same evaluation points for each evaluation item), the obtained ratings for the images are different on the basis of the differences between the weight value sets that have been set for each of the image processing devices 100. Consequently, the image diagnostic results based on the ratings are individual diagnostic results for each of the image processing devices 100, even though the image used in the diagnosis is the same.

The relationship between the weight value sets illustrated in Fig. 10 and evaluation results will be examined in further detail. Referring to the evaluation points for each evaluation item illustrated in Fig. 5, the evaluation item "staining" is the lowest, with 41 points. On the other hand, in the weight value sets illustrated in Fig. 10, referring to the weight value for the evaluation item "staining" for each of unit S-1, unit T-1, and unit U-1 above, unit S-1 and unit U-1 have small values of 0.6 and 0.3, respectively, whereas unit T-1 has a large value of 1.0. This means that the presence or absence of staining in an image is not scrutinized for unit S-1 and unit U-1, whereas the presence or absence of staining in an image is scrutinized for unit T-1. As a result, the image evaluation points calculated using the weight value sets illustrated in Fig. 10 are such that, for unit T-1, where staining is scrutinized, the evaluation points (41 points) are low, but for unit S-1 and unit U-1, where staining is not scrutinized as much compared to unit T-1, the evaluation points (64.6 points for unit S-1, 78.4 points for unit U-1) are higher than the evaluation points for unit T-1.

As above, by setting weight values for the evaluation items individually for each image processing device 100, an evaluation result reflecting the preferences of the user of the image processing device 100 may be obtained from an image evaluation in the diagnostic server 200.

### <Setting of weight values based on history information about image processing device 100>

In the exemplary embodiment above, the weight values for evaluation items are set on the basis of user input. In contrast, it is conceivable to set the weight values for evaluation items automatically on the basis of the usage of the image processing device 100 by the user. When an image output process is executed, the image processing device 100 obtains history information pertaining to output. The history information contains, for example, information on image quality correction modes and output modes selected in image formation in the image processing device 100. An image quality correction mode is an operating mode in which the image quality of the image to be outputted is corrected according to the type of image. In an image quality correction mode, for example, by designating photograph, graphics, text, or the like as the type of image, the image to be outputted is subjected to correction that changes the number of color gradations and contrast. An output mode is an operating mode in which the image quality of the image to be outputted is controlled according to the settings of the image processing device 100. In an output mode, for example, by designating standard, high image quality, high definition, or the like as the type of output, the resolution and number of color gradations are controlled in the image output operations.

In the image processing device 100, when output is performed using an image quality correction mode and an output mode, the image quality is changed according to the selected operating modes, and therefore evaluation items that are conspicuous and evaluation items that are inconspicuous in image diagnosis may occur in the output image. It follows that if a certain user continually uses a specific image quality correction mode or output mode, the user may be assumed to have preferences regarding whether to scrutinize specific evaluation items in relation to the image quality of the output image. Accordingly, it is conceivable to prepare weight value sets in which the weight values for specific evaluation items are set to large values or small values in correspondence with these image quality correction modes and output modes, and to apply a weight value set according to the operating modes that tend to be used in the image processing device 100.

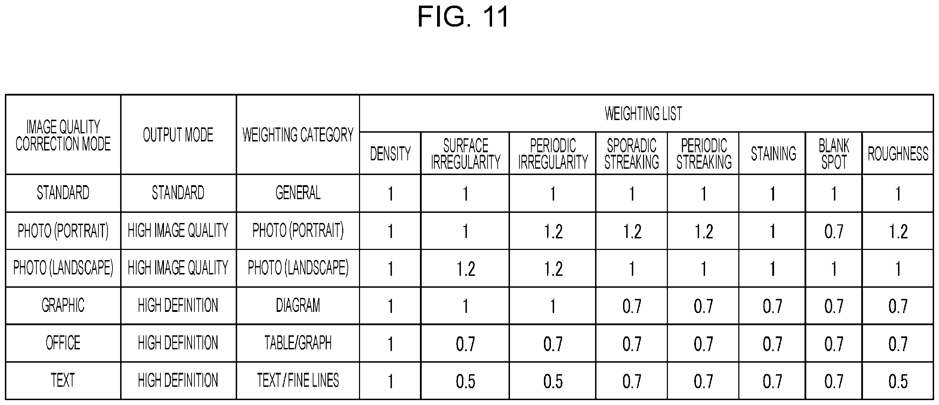

Fig. 11 is a diagram illustrating an example of weight value sets prepared in correspondence with operating modes. In the example illustrated in Fig. 11, sets of weight values for each of the evaluation items to be treated as operational parameters are set in correspondence with image quality correction mode and output mode settings. In the example illustrated in the drawing, the types of evaluation items are similar to the evaluation items illustrated in Fig. 6C, Figs. 7A and 7B, and the like. In the example illustrated in Fig. 11, "standard", "photo (portrait)", "photo (landscape)", "graphic", "office", "text", and the like are registered as image quality correction modes. Also, "standard", "high image quality", "high definition", and the like are registered as output modes. In addition, images to be outputted by combinations of an image quality correction mode and an output mode are classified into "general", "photo (portrait)", "photo (landscape)", "diagram", "table/graph", and "text/fine lines" as weighting categories. In Fig. 11, a weighting category is information specifying the type of a set of weight values.

In the example illustrated in Fig. 11, when the image quality correction mode is "standard" and the output mode is "standard", the weighting category is "general", and in the weight value set, the weight values for the evaluation items are all 1. Taking the weight values for this case as a reference, for example, when the image quality correction mode is "photo (portrait)" and the output mode is "high image quality", the weight values for the evaluation items "periodic irregularity", "sporadic streaking", "periodic streaking", and "roughness" are larger values, and the weight value for "blank spot" is a smaller value. When the image quality correction mode is "graphic" and the output mode is "high definition", the weight values for the evaluation items "sporadic streaking", "periodic streaking", "staining", "blank spot", and "roughness" are smaller values. In this way, an individual weight value set is set according to the image quality correction mode and the output mode.

When executing operations for image output or the like, the image processing device 100 obtains history information pertaining to the executed process. When the image quality correction mode and output mode described above are used, information about the operating modes used is included in the history information. The history information is transmitted from the image processing device 100 to the diagnostic server 200, and the diagnostic server 200 identifies the operating modes used in the image processing device 100 on the basis of the obtained history information and selects a weight value set to apply according to the identified operating modes.

Conceivably, the diagnostic server 200 may set a condition for changing the weight value set based on the operating modes that tend to be used in the image processing device 100, and select the weight value set to apply when the condition for changing is met. For example, the condition for changing may be that a specific operating mode is used in a ratio greater than a predetermined threshold value in image outputs over a certain period or a certain number of image outputs by the image processing device 100, and a weight value set prepared in correspondence with the specific operating mode may be applied. The condition for changing may also be that a specific operating mode is used consecutively in image outputs over a certain period or a certain number of image outputs by the image processing device 100, and a weight value set prepared in correspondence with the specific operating mode may be applied.

One conceivable example of a method of applying a weight value set is to initially apply the weight value set for the weighting category "general" (image quality correction mode "standard", output mode "standard") in Fig. 11, and thereafter apply a weight value set according to the operating modes that tend to be used in the image processing device 100. As an example, suppose that in one image processing device 100, images with drawn text are outputted frequently, and the condition for changing the weight value set is met. In this case, the diagnostic server 200 changes the weight value set to apply to the image processing device 100 from the weight value set for the weighting category "general" to the weight value set for the weighting category "text/fine lines" in Fig. 11.

The relationship between the weight value sets illustrated in Fig. 11 and evaluation results will be described. As one example, consider the case of outputting the same image from two image processing devices 100 in which operating modes in different weighting categories are often used. Assume that in one image processing device 100 (designated "unit A"), the image quality correction mode "office" and the output mode "high definition" are often used. In the example illustrated in Fig. 11, this combination of operating modes belongs to the weighting category "table/graph". Assume that in the other image processing device 100 (designated "unit B"), the image quality correction mode "photo (portrait)" and the output mode "high image quality" are often used. In the example illustrated in Fig. 11, this combination of operating modes belongs to the weighting category "photo (portrait)".

Consider the case in which the same image is outputted from unit A and unit B. The evaluation points for each evaluation item for the image are assumed to be the evaluation points illustrated in Fig. 5. That is, "density" is 84 points, "surface irregularity" is 93 points, "periodic irregularity" is 82 points, "sporadic streaking" is 88 points, "periodic streaking" is 91 points, "staining" is 41 points, "blank spot" is 87 points, and "roughness" is 86 points.

In unit A, when a condition for changing the weight value set is met, the weight value set for the weighting category "table/graph" is applied. In unit B, when a condition for changing the weight value set is met, the weight value set for the weighting category "photo (portrait)" is applied. Consequently, if the weight value sets illustrated in Fig. 11 are used to calculate the evaluation points for each category according to the calculation method described with reference to Fig. 5, unit A has 84 points in the category "density", 84.6 points in "surface irregularity", 58.7 points in "defect", and 90.2 points in "noise". Similarly, unit B has 84 points in the category "density", 73.6 points in "surface irregularity", 41 points in "defect", and 83.2 points in "noise".

If the evaluation points for the images are then calculated on the basis of these evaluation points for each category, unit A has 58.7 points and unit B has 41 points. In this way, even though the images are the same (images with the same evaluation points for each evaluation item), the obtained ratings for the images differ on the basis of the differences between the weight value sets that have been set according to the operating modes that tend to be used in image processing. Consequently, the image diagnostic results based on the ratings are individual diagnostic results for each of the image processing devices 100, even though the image used in the diagnosis is the same.

The foregoing describes an exemplary embodiment of the present disclosure, but the technical scope of the present disclosure is not limited to the exemplary embodiment above. Various modifications and substitutions that do not depart from the scope of the technical ideas of the present disclosure are also included in the present disclosure.

### <Appendix>

(((1))) An information processing system comprising: at least one processor, wherein the processor is configured to: cause a storage device to retain weight values for each of one or more evaluation items related to image quality; obtain image data to be evaluated; evaluate the image data for each of the evaluation items based on evaluation criteria for each of the evaluation items; and evaluate the image quality of an image pertaining to the image data on a basis of evaluation results of the evaluation for each of the evaluation items and the corresponding weight values retained in the storage device for each of the evaluation items.
(((2))) The information processing system according to (((1))), wherein the storage device retains a table in which a plurality of sets of the weight values for the evaluation items are associated with image output characteristics, and the processor is configured to: obtain information specifying the output characteristics of a piece of equipment that outputs the image data, in response to a user operation; associate, on a basis of the table, a set of the weight values corresponding to the output characteristics of the piece of equipment specified by the information with the piece of equipment; and evaluate the image quality of an image outputted by the piece of equipment by applying the set of the weight values associated with the piece of equipment to the evaluation results for each of the evaluation items.
(((3))) The information processing system according to (((2))), wherein the processor is configured to accept an individual change to the weight value for one or more evaluation items in a set of the weight values for individual pieces of equipment with which the set of the weight values is associated, and update the set of the weight values, in response to a user operation.
(((4))) The information processing system according to (((2))), wherein the processor is configured to accept a change to adjust, in a predetermined range, each weight value included in a set of the weight values for individual pieces of equipment with which the set of the weight values is associated, and update the set of the weight values, in response to a user operation.
(((5))) The information processing system according to any one of (((1))) to (((4))), wherein the processor is configured to: obtain history information related to image output from a piece of equipment that outputs the image data; update the weight values to be applied to an evaluation of an image outputted by the piece of equipment, on a basis of information related to image quality included in the obtained history information; and evaluate the image quality of an image outputted by the piece of equipment by applying the updated weight values to the evaluation results for each of the evaluation items.
(((6))) The information processing system according to (((5))), wherein, when a setting related to image quality in the piece of equipment meets a predetermined condition in a plurality of image outputs by the piece of equipment, the processor is configured to update the weight values on a basis of the history information for the plurality of image outputs.
(((7))) A program causing a computer to execute a process comprising: causing a storage device to retain weight values for each of one or more evaluation items related to image quality; obtaining image data to be evaluated; evaluating the image data for each of the evaluation items based on evaluation criteria for each of the evaluation items; and evaluating the image quality of an image pertaining to the image data on a basis of evaluation results of the evaluation for each of the evaluation items and the corresponding weight values retained in the storage device for each of the evaluation items.

According to the information processing system according to (((1))), it is possible to return an image quality evaluation that reflects user preferences, as compared to a configuration that evaluates image quality on the basis of indiscriminate criteria.

According to the information processing system according to (((2))), the effort involved in setting weight values may be reduced compared to a configuration in which a user inputs weight values individually for each evaluation item.

According to the information processing system according to (((3))), evaluation may be performed in accordance with individualized settings for each piece of equipment, as compared to a configuration that evaluates image quality on the basis of weight values set according to output characteristics.

According to the information processing system according to (((4))), evaluation may be performed in accordance with settings for each piece of equipment, as compared to a configuration that evaluates image quality on the basis of weight values set according to output characteristics.

According to the information processing system according to (((5))), the effort involved in setting weight values may be reduced compared to a configuration in which a user inputs weight values for each evaluation item according to the piece of equipment used.

According to the information processing system according to (((6))), user preferences regarding image quality may be reflected, unlike a configuration that updates weight values on the basis of a single image output.

According to the program according to (((7))), it is possible to return an image quality evaluation that reflects user preferences on a computer having the program installed thereon, as compared to a configuration that evaluates image quality on the basis of indiscriminate criteria.

## Claims

1. An information processing system comprising:
at least one processor configured to:
cause a storage device to retain weight values for each of one or more evaluation items related to image quality;
obtain image data to be evaluated;
evaluate the image data for each of the evaluation items based on evaluation criteria for each of the evaluation items; and
evaluate the image quality of an image pertaining to the image data on a basis of evaluation results of the evaluation for each of the evaluation items and the corresponding weight values retained in the storage device for each of the evaluation items.

2. The information processing system according to claim 1, wherein
the storage device retains a table in which a plurality of sets of the weight values for the evaluation items are associated with image output characteristics, and
the processor is configured to:
obtain information specifying the output characteristics of a piece of equipment that outputs the image data, in response to a user operation;
associate, on a basis of the table, a set of the weight values corresponding to the output characteristics of the piece of equipment specified by the information with the piece of equipment; and
evaluate the image quality of an image outputted by the piece of equipment by applying the set of the weight values associated with the piece of equipment to the evaluation results for each of the evaluation items.

3. The information processing system according to claim 2, wherein the processor is configured to accept an individual change to the weight value for one or more evaluation items in a set of the weight values for individual pieces of equipment with which the set of the weight values is associated, and update the set of the weight values, in response to a user operation.

4. The information processing system according to claim 2, wherein the processor is configured to accept a change to adjust, in a predetermined range, each weight value included in a set of the weight values for individual pieces of equipment with which the set of the weight values is associated, and update the set of the weight values, in response to a user operation.

5. The information processing system according to any one of claims 1 to 4, wherein the processor is configured to:
obtain history information related to image output from a piece of equipment that outputs the image data;
update the weight values to be applied to an evaluation of an image outputted by the piece of equipment, on a basis of information related to image quality included in the obtained history information; and
evaluate the image quality of an image outputted by the piece of equipment by applying the updated weight values to the evaluation results for each of the evaluation items.

6. The information processing system according to claim 5, wherein, when a setting related to image quality in the piece of equipment meets a predetermined condition in a plurality of image outputs by the piece of equipment, the processor is configured to update the weight values on a basis of the history information for the plurality of image outputs.

7. An information processing method comprising:
causing a storage device to retain weight values for each of one or more evaluation items related to image quality;
obtaining image data to be evaluated;
evaluating the image data for each of the evaluation items based on evaluation criteria for each of the evaluation items; and
evaluating the image quality of an image pertaining to the image data on a basis of evaluation results of the evaluation for each of the evaluation items and the corresponding weight values retained in the storage device for each of the evaluation items.

8. A program causing a computer to execute a process comprising:
causing a storage device to retain weight values for each of one or more evaluation items related to image quality;
obtaining image data to be evaluated;
evaluating the image data for each of the evaluation items based on evaluation criteria for each of the evaluation items; and
evaluating the image quality of an image pertaining to the image data on a basis of evaluation results of the evaluation for each of the evaluation items and the corresponding weight values retained in the storage device for each of the evaluation items.
